# EUROPÄISCHE PATENTSCHRIFT

(11) **EP 3 597 572 B1**
(45) Veröffentlichungstag und Bekanntmachung des Hinweises auf die Patenterteilung: **21.01.2026**
(21) Anmeldenummer: 19177672.3
(22) Anmeldetag: 31.05.2019
(51) Int. Cl.: B65G 47/84, B67C 3/00

(54) **VERFAHREN ZUM EINTEILEN VON BEHÄLTERN AUF EINE MASCHINENTEILUNG UND BEHANDLUNGSMASCHINE FÜR BEHÄLTER**
METHOD FOR ALLOCATING CONTAINERS TO A MACHINE SECTION AND PROCESSING MACHINE FOR CONTAINERS
PROCÉDÉ DE RÉPARTITION DE RÉCIPIENTS VERS UNE DIVISION DE MACHINE ET MACHINE DE TRAITEMENT POUR RÉCIPIENTS

(30) Priorität: 17.07.2018 DE 102018211821
(43) Veröffentlichungstag der Anmeldung: 22.01.2020
(73) Patentinhaber: Krones AG, 93073 Neutraubling (DE)
(72) Erfinder: KIPPER, Gundolf, 93073 Neutraubling (DE); PIENDL, Martin, 93073 Neutraubling (DE); BRAATZ, Bernd, 93073 Neutraubling (DE)
(74) Vertreter: Grünecker Patent- und Rechtsanwälte PartG mbB

(56) Entgegenhaltungen:
- EP-A1- 2 615 046
- EP-A1- 3 178 765
- WO-A1-01/30674
- WO-A1-01/42113
- WO-A2-2014/207582
- DE-A1- 102008 020 116
- DE-A1- 102012 207 366
- DE-A1- 102015 201 852
- DE-A1- 3 407 386

## Beschreibung

Die Erfindung betrifft ein Verfahren zum Einteilen von Behältern aus Kunststoff auf eine Maschinenteilung einer Behandlungsmaschine gemäß Oberbegriff des Anspruchs 1 sowie eine Behandlungsmaschine gemäß Oberbegriff des Anspruchs 7.

Aus WO 2017/190853 A1 ist eine Behandlungsmaschine für Behälter aus Kunststoff mit einem Einlaufstern zum Einteilen der Behälter auf eine Maschinenteilung bekannt. Demnach umfassen Behandlungsmaschinen, wie beispielsweise Etikettiermaschinen, üblicherweise einen Behältereinlauf, in dem ein geradlinig zugeführter Behälterstrom vereinzelt und auf die Maschinenteilung der Behandlungsmaschine gebracht wird. Die derart vereinzelten Behälter werden dann mit einem Einlaufstern an die Behandlungsmaschine übergeben.

Insbesondere für die Vereinzelung und Einteilung mit Produkt gefüllter Behälter aus PET haben sich Einteilsterne gegenüber Einteilschnecken wegen der geringeren Beanspruchung und/oder Schädigung der Behälteroberflächen bei der Vereinzelung/Einteilung als vorteilhaft herausgestellt. Dies ergibt sich insbesondere daraus, dass die Transporttaschen der Einteilsterne die Behälter nicht an ihren Seitenwänden mitnehmen sondern an ihren Hals- und/oder Verschlussbereichen. Da die Seitenwände der Behälter bei der Herstellung der Transportteilung nur eine untergeordnete Rolle spielen, sind Einteilsterne zudem flexibler hinsichtlich einer Verarbeitung unterschiedlicher Behälterformate. Solche Einteilsterne sind beispielsweise in DE 10 2015 224 731 A1 und DE 10 2008 020 116 A1 beschrieben. Aus WO 01/42113 A1 sind ein gattunsgemäßes Verfahren und eine gattunsgemäße Behandlungsmaschine bekannt.

Als problematisch hat sich jedoch herausgestellt, dass trotz vergleichsweise geringem Behälterstaudruck immer wieder unkontrollierte Kollisionen einzelner Behälter am Einlauf zum Einteilstern auftreten und sich derartige Instabilitäten am Einlauf bis zur Übergabe der Behälter an einen anschließenden Einlaufstern und/oder an das nachfolgende Maschinenkarussell fortsetzen. Erschwerend kommt hinzu, dass die Behälter an ihren Hals- und/oder Verschlussbereichen hängend vom Einteilstern übernommen, eingeteilt und übergeben werden.

Es besteht daher ein Bedarf für diesbezüglich verbesserte Verfahren und Vorrichtungen zum Einteilen von Behältern auf eine Maschinenteilung einer Behandlungsmaschine, insbesondere hinsichtlich eines stabileren Betriebs beim Herstellen der Transportteilung und bei der anschließenden Übergabe an das nachfolgende Transportmittel der Behandlungsmaschine.

Die gestellte Aufgabe wird mit einem Verfahren zum Einteilen von Behältern aus Kunststoff auf eine Maschinenteilung einer Behandlungsmaschine gemäß Anspruch 1 gelöst. Die Behälter bestehen aus Kunststoff und insbesondere aus PET. Vorzugsweise handelt es sich um mit Produkt gefüllte Behälter.

Demnach nimmt ein rotierender Einteilstern die in einer Einlaufrichtung stehend antransportierten Behälter an ihren Hals- und/oder Verschlussbereichen im Abstand der Maschinenteilung mit und transportiert die Behälter bis zur Übergabe an einen Einlaufstern auf diese Weise weiter. Erfindungsgemäß ändert sich dabei die Transportrichtung der Behälter ausgehend von der Einlaufrichtung um wenigstens 90° bis zur Übergabe an den Einlaufstern.

Dadurch kann ein erster Verfahrensschritt, nämlich die Einteilung der Behälter auf die Maschinenteilung, von einem zweiten Verfahrensschritt, nämlich der Übergabe der Behälter an den Einlaufstern, räumlich getrennt werden. Folglich kann die Transportbewegung und Transportlage der auf Maschinenteilung gebrachten Behälter vor der Übergabe an den Einlaufstern zuverlässig stabilisiert werden. Insbesondere lässt sich die Einteilung der Behälter und die Übergabe an den Einlaufstern besser vom nachrückenden Behälterstrom am Einlauf zum Einteilstern entkoppeln.

Vorzugsweise bringt der Einteilstern die Behälter ausgehend von der Einlaufrichtung innerhalb eines Winkelsegments von höchstens 60° auf die Maschinenteilung. Darunter ist zu verstehen, dass die Behälter spätestens nach Durchlaufen dieses Winkelsegments in ihrer bezüglich der Transporttaschen des Einteilsterns definierten Sollposition mitgenommen werden. Folglich haben die Behälter an ihrem Hals- und/oder Verschlussbereichen spätestens nach Durchlaufen dieses Winkelsegments den vorgegebenen Abstand der Maschinenteilung zueinander.

Vorzugsweise werden die Behälter an ihren Hals- und/oder Verschlussbereichen von am Einteilstern ausgebildeten Transporttaschen mitgenommen und aufrechtstehend zum Einlaufstern geschoben. Somit ist gleichermaßen eine materialschonende Mitnahme der Behälter an ihren Hals- und/oder Verschlussbereichen gegeben, als auch eine durchgehende Stabilisierung der aufrechten Transportlage durch Bodenkontakt im Bereich des Einteilsterns. Darunter ist zu verstehen, dass die Behälter im Bereich des Einteilsterns nicht bodenfrei transportiert, sondern auf einer geeigneten Gleitunterlage stehend weitergeschoben werden.

Ferner werden die Behälter an ihrem Hals- und/oder Verschlussbereichen von außen her mittels einer Führungsschiene seitlich um den Einteilstern geführt. Das heißt, die Hals- und/oder Verschlussbereiche werden von den Transporttaschen des Einteilsterns im Umlaufrichtung vorwärts geschoben und dabei seitlich von wenigstens einer außenliegenden Führungsschiene entlang eines Kreisbogensegments geführt.

Zudem werden die Behälter dabei auch von innen her mittels einer Führungsschiene seitlich um den Einteilstern geführt. Die Hals- und/oder Verschlussbereiche können dann zwischen den beidseitig verlaufenden Führungsschienen bezüglich eines vorgegebenen Teilkreises mittig geführt bzw. zentriert werden. Dies ermöglicht eine besonders stabile und reproduzierbare Führung der Hals- und/oder Verschlussbereiche.

Vorzugsweise werden die Behälter an ihren Seitenwänden wenigstens von außen her mittels eines Rollengeländers seitlich um den Einteilstern geführt. Dadurch können die Behälter beispielsweise gegenüber den am Einteilstern auftretenden Fliehkräften zusätzlich seitlich stabilisiert werden, ohne die Seitenwände nennenswert mechanisch zu belasten. Insbesondere kann auf diese Weise auch einem Verkratzen der Seitenwände entgegengewirkt werden.

Vorzugsweise werden die Behälter an ihren Seitenwänden dann auch von innen her mittels eines Rollengeländers seitlich um den Einteilstern geführt. Dadurch lässt sich die seitliche Führung bezüglich eines Teilkreises des Einteilsterns zusätzlich stabilisieren.

Erfindungsgemäß laufen die Behälter auf einem Einlaufband stehend ein und werden vom Einteilstern an ihren Hals- und/oder Verschlussbereichen insbesondere in seitlicher Richtung vom Einlaufband geschoben. Dadurch lässt sich ein stabilisierender Bodenkontakt der Behälter bei der Übernahme der Behälter vom Einlaufband beibehalten. Zudem können die Seitenwände der Behälter vor mechanischer Beschädigung geschützt werden.

Vorzugsweise werden die Behälter am Einlaufstern von aktiv gesteuerten Klammern unterhalb ihrer Hals- und/oder Verschlussbereiche übernommen. Dies ermöglicht eine zuverlässige Übernahme der Behälter auch bei vergleichsweise hohen Maschinenleistungen. Prinzipiell denkbar wäre auch eine Übernahme der Behälter von einem Einlaufstern mit Transporttaschen und daran stationär ausgebildeten äußeren Führungsgeländern oder dergleichen.

Die gestellte Aufgabe wird ebenso mit einer Behandlungsmaschine gemäß Anspruch 7 gelöst. Demnach eignet sich diese zur Behandlung von Behältern aus Kunststoff, insbesondere zur Behandlung von gefüllten Kunststoffbehältern, wie beispielsweise PET-Flaschen.

Die Behandlungsmaschine umfasst wenigstens einen Einteilstern zum Einteilen der Behälter auf eine Maschinenteilung der Behandlungsmaschine und einen anschließenden Einlaufstern, wobei der Einteilstern eine Einlaufrichtung der einzuteilenden Behälter aufweist und eine Transportrichtung bei Übergabe der eingeteilten Behälter an den Einlaufstern vorgibt. Erfindungsgemäß schließen die Einlaufrichtung und die Transportrichtung einen Umlenkwinkel von wenigstens 90° ein.

Damit lassen sich die bezüglich des Anspruchs 1 beschriebenen Vorteile erzielen. Praktikabel sind ferner Umlenkwinkel von 90-135° und insbesondere von 90-115°.

Ferner weist der Einteilstern im Abstand der Maschinenteilung angeordnete Transporttaschen zur Mitnahme der Behälter an ihren Hals- und/oder Verschlussbereichen auf. Folglich können die Seitenwände der Behälter beim Herstellen der Transportteilung entlastet und vor mechanischer Beschädigung geschützt werden.

Vorzugsweise sind die Transporttaschen von vorderen abschnittsweise konvex gekrümmten Führungsflanken und hinteren Mitnehmerflanken begrenzt. Dies ermöglicht ein vergleichsweises sanftes Hineingleiten der Hals- und/oder Verschlussbereiche in die Transporttaschen und eine anschließende formschlüssige Mitnahme derselben durch die Mitnehmerflanken. Folglich können die Behälter innerhalb eines vergleichsweise kleinen Umlenkwinkels von den Mitnehmerflanken auf die Transportteilung gebracht werden und liegen daher bei der Übernahme durch den nachfolgenden Einlaufstern in einer stabilen und reproduzierbaren Lage bezüglich der Transporttaschen vor.

Vorzugsweise ist der Einlaufstern ein Klammerstern zum aktiven Umgreifen der Behälter an ihren Seitenwänden. Der Klammerstern umfasst dann individuell steuerbare Klammern, beispielsweise mit zwei übereinanderliegenden Fingern an einem Klammerschenkel und einem bezüglich des Höhenniveaus dazwischenliegenden Finger am anderen Klammerschenkel, um eine orthogonale Lage des Behälters am Einteilstern zu erzielen.

Erfindungsgemäß umfasst die Behandlungsmaschine ferner ein Einlaufband zum stehenden Antransport der Behälter und vorzugsweise eine an das Einlaufband anschließende und sich peripher bis zum Einlaufstern um den Einteilstern erstreckende Gleitunterlage für die Behälter. Die Bodenbereiche der Behälter gleiten dann auf der Gleitunterlage entlang ihrer Transportbahn um den Einteilstern. Dies ermöglicht eine konstruktiv einfache und gleichzeitig effektive Stabilisierung einer ordnungsgemäßen aufrechtstehenden Behälterlage beim Herstellen der Transportteilung und beim Weitertransport zum Einlaufstern.

Ferner umfasst die Behandlungsmaschine wenigstens eine an das Einlaufband anschließende Führungsschiene zur seitlichen und insbesondere beidseitigen Führung der Hals- und/oder Verschlussbereiche um den Einteilstern. Damit können die Hals- und/oder Verschlussbereiche zuverlässig entlang eines Kreisbogensegments entlang des Einteilsterns bis zur Übergabe an den Einlaufstern geführt werden. Beidseitig ausgebildete Führungsschienen ermöglichen eine bezüglich eines Teilkreises des Einteilsterns im Wesentlichen mittige bzw. zentrierte Führung.

Vorzugsweise umfasst die Behandlungsmaschine ferner wenigstens ein an das Einlaufband anschließendes Rollengeländer zur seitlichen und insbesondere beidseitigen Führung der Behälter an ihren Seitenwänden um den Einteilstern. Dies ermöglicht eine zusätzliche Stabilisierung der Behälter und bei beidseitiger Führung mittels Rollengeländer eine bezüglich des Teilkreises des Einteilsterns im Wesentlichen mittige bzw. zentrierte Führung der Behälter.

Vorzugsweise umfasst der Einteilstern eine mitrotierende Abdeckplatte für die Hals- und/oder Verschlussbereiche, wobei die Abdeckplatte so ausgelegt ist, dass sie bei orthogonal aufrechter Behälterstellung ein Spiel zum Hals- und/oder Verschlussbereiche aufweist und bei einem Kippen und/oder Anheben der Behälter als mechanischer Anschlag nach oben wirkt. Dadurch kann die Lage der Behälter im Bereich des Einteilsterns zusätzlich stabilisiert werden, um eine ordnungsgemäße Übergabe der Behälter an den Einlaufstern zuverlässig zu erzielen.

Eine bevorzugte Ausführungsform der Erfindung ist zeichnerisch dargestellt. Es zeigen:
- Figur 1: eine Draufsicht auf die Behandlungsmaschine; und
- Figur 2: eine Teilansicht mit schematisch angedeuteten Führungsschienen und Rollengeländern; und
- Figur 3: einen schematischen Radialschnitt durch einen Randbereich des Einteilsterns.

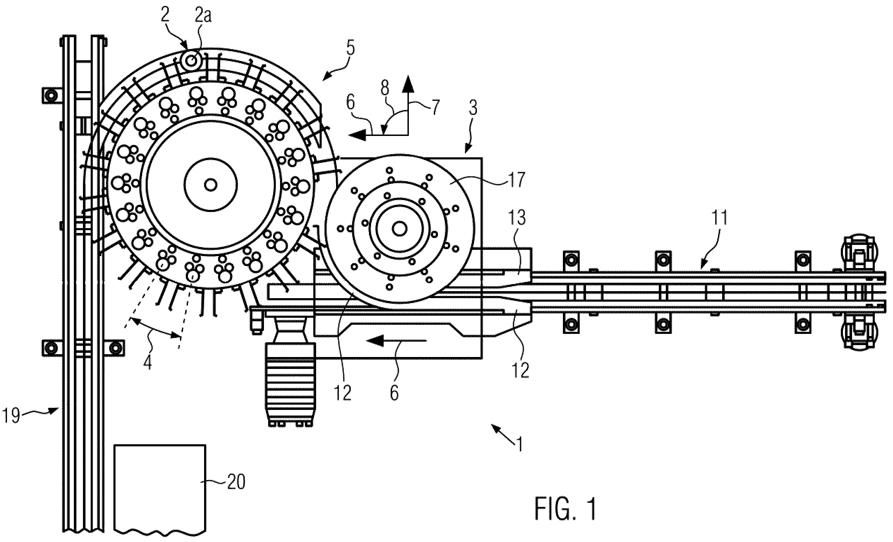

Wie die Figur 1 erkennen lässt, umfasst die Behandlungsmaschine 1 für Behälter 2 aus Kunststoff, wie beispielsweise für mit Produkt gefüllte PET-Flaschen, einen Einteilstern 3 zum Einteilen der Behälter 2 auf eine Maschinenteilung 4 der Behandlungsmaschine 1 und einen an den Einteilstern 3 anschließenden Einlaufstern 5.

Der Einlaufstern 3 weist eine schematisch angedeutete Einlaufrichtung 6 für die einzuteilenden Behälter 2 auf und eine Transportrichtung 7 bei der Übergabe der eingeteilten Behälter 2 an den Einlaufstern 5. Die Einlaufrichtung 6 und die Transportrichtung 7 schließen im Beispiel einen Umlenkwinkel 8 des Behälterstroms von 90° ein.

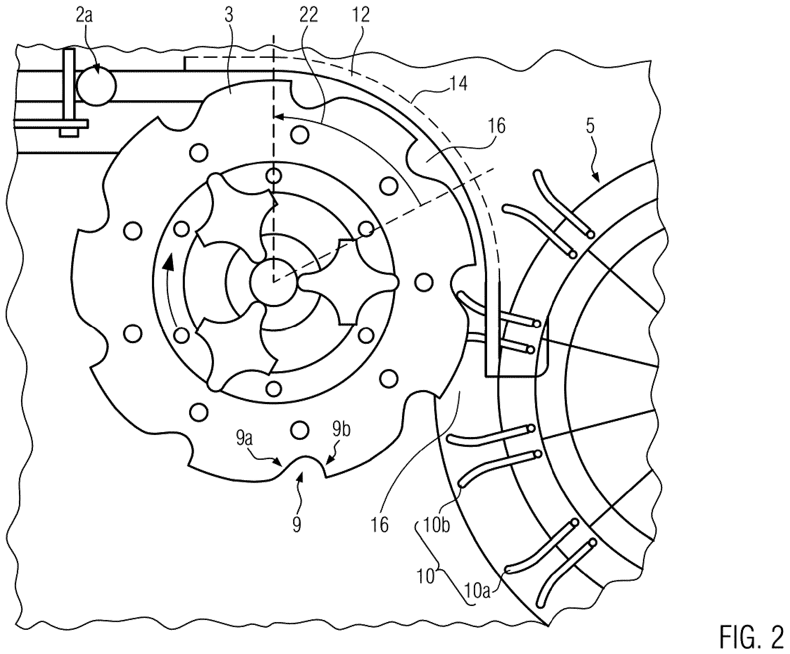

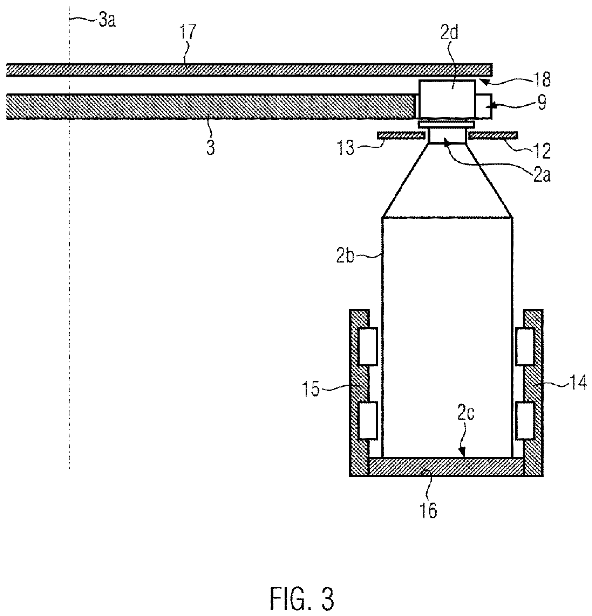

Wie insbesondere aus der Figur 2 hervorgeht, weißt der Einteilstern 3 im Abstand der Maschinenteilung 4 angeordnete Transporttaschen 9 zur Mitnahme der Behälter 2 an ihren Hals- und/oder Verschlussbereichen 2a auf. Letztere sind in der Figur 3 schematisch zu erkennen.

Die Transporttaschen 9 sind von vorderen, konvex gekrümmten Führungsflanken 9a und hinteren Mitnehmerflanken 9b begrenzt. Jeder Hals- und/oder Verschlussbereich 2a läuft demnach anfangs an einer Führungsflanke 9a entlang und in die jeweilige Transporttasche 9 hinein, bis der Hals- und/oder Verschlussbereich 2a gegen die Mitnehmerflanke 9b stößt und von dieser mit der Umlaufgeschwindigkeit des Einteilsterns 3 auf prinzipiell bekannte Weise mitgenommen wird. Dies ermöglicht eine materialschonende und weitgehend formatunabhängige Mitnahme und Einteilung der Behälter 2 auf die vorgegebene Transportteilung 4. Der Einlaufstern 5 ist vorzugsweise als Klammerstern mit individuell steuerbaren Klammern 10 ausgebildet. Die Klammern 10 sind einzeln steuerbar, indem die Klammerschenkel 10a, 10b beispielsweise mittels einer Steuerkurve aufeinander zubewegt werden. Zur Stabilisierung der Behälter 2 in den Klammern 10 kann beispielsweise jeweils einer der Klammerschenkel 10a, 10b nur einen einzelnen Finger aufweisen und der jeweils andere Klammerschenkel je einen darüber und darunter angeordnete Finger. Dies stabilisiert eine im Wesentlichen aufrecht orthogonale Lage der Behälter 2 bei deren Übernahme in den Einlaufstern 5. Wie die Figur 1 ferner erkennen lässt, umfasst die Behandlungsmaschine 1 ferner ein Einlaufband 11 zum stehenden Antransport der Behälter 2. Oberhalb des Einlaufbands 11 sind Führungsschienen 12, 13 zur beidseitigen Führung der Hals- und/oder Verschlussbereiche 2a der Behälter 2 angeordnet. Bezüglich des Teilkreises des Einteilsterns 3 liegt die eine Führungsschiene 12 außen, die andere Führungsschien 13 innen. Beidseitige Führungsschienen 12, 13 führen die Hals- und/oder Verschlussbereiche 2a im Wesentlichen mittig bezüglich einer vorgegebenen Bewegungsbahn zum Einteilstern 3 hin und um diesen herum. In der Figur 1 ist dies lediglich für die bezüglich der Bewegungsbahn äußere Führungsschiene 12 zu erkennen, da die bezüglich der Bewegungsbahn innere Führungsschiene 13 im Bereich des Einteilsterns 3 verdeckt ist. Die Führungsschienen 12, 13 ermöglichen eine besonders präzise Führung der Hals- und/oder Verschlussbereiche 2a bei/nach dem Hineinlaufen in die Transporttaschen 9 bis zur Übergabe der Behälter 2 an den Einlaufstern 5.

In der Figur 3 sind die Führungsschienen 12, 13 in einer bezüglich der Drehachse 3a des Einteilsterns 3 radialen Schnittebene schematisch angedeutet.

Gemäß der Figur 3 sind optional und vorzugsweise beidseitig im Bereich des Einteilsterns 3 ausgebildete Rollengeländer 14, 15 für die Seitenwände 2b der Behälter 2 vorhanden. Der gekrümmte Verlauf der in der Draufsicht verdeckten Rollengeländer 14, 15 ist in der Figur 2 schematisch durch gestrichelte Linien angedeutet. Die Rollengeländer 14, 15 führen die Seitenwände 2b der Behälter 2 auf besonders materialschonende Weise.

Auch für die Rollengeländer 14, 15 gilt, dass diese nicht zwangsläufig beidseitig der Bewegungsbahn der Behälter 2 vorhanden sein müssen. Zur Stabilisierung der Behälter 2 gegenüber den im Bereich des Einteilsterns 3 auf die Behälter 2 wirkenden Fliehkräften ist insbesondere das außenliegende Rollengeländer 14 vorteilhaft.

In der Figur 3 ist ferner eine Gleitunterlage 16 für die Bodenbereiche 2c der Behälter 2 zu erkennen. Die Gleitunterlage 16 schließt unmittelbar an das Einlaufband 11 an und erstreckt sich bis in den Transportbereich des Einlaufsterns 5. Dies ist teilweise in der Figur 2 zu erkennen.

Die Gleitunterlage 16 kann auch als Überschub bezeichnet werden. Die Gleitunterlage 16 ermöglicht einen durchgehend aufrechtstehenden Transport der Behälter 2 sowohl im Bereich des Einteilsterns 3 als auch im Bereich des Einlaufsterns 5. Dadurch bleibt die ordnungsgemäße, nämlich die aufrecht orthogonale Transportlage der Behälter 2 beim Herstellender Transportteilung 4 und bei der Übergabe an den Einlaufstern 5 durchweg stabil.

Zur zusätzlichen Stabilisierung der Transportlage dient eine mit dem Einteilstern 3 mitrotierende und diesen nach oben hin begrenzende Abdeckplatte 17, die bei ordnungsgemäß orthogonal aufrechter Lage der Behälter 2 ein Spiel 18 zu den Hals- und/oder Verschlussbereichen 2a oder zu daran vorhandenen Verschlüssen 2d aufweist.

Das Spiel 18 ermöglicht einerseits ein ungehindertes Einfädeln der Hals- und/oder Verschlussbereiche 2a in die Transporttaschen 9 und begrenzt andererseits ein unerwünschtes Kippen und/oder Anheben der Behälter 2 aus der ordnungsgemäß aufrechtstehenden Transportlage, beispielsweise beim Voranschieben der Behälter 2 auf der Gleitunterlage 16. In der Figur 1 sind beispielhaft ein Einlaufstern 5 anschließendes lineares Transportmittel 19 und ein diesem zugeordnetes Behandlungsaggregat 20 schematisch angedeutet. Dies soll verdeutlichen, dass die Behandlungsmaschine 1 neben dem beschriebenen Einlaufbereich mit dem Einteilstern 3 und dem Einlaufstern 5 wenigstens ein Behandlungsaggregat 20, beispielsweise ein Etikettieraggregat, zur Behandlung der Behälter 2 aufweist. Das Transportmittel 19 der Behandlungsmaschine 1 ist vorzugsweise ein Transportkarussell, in dessen Peripherie wenigstens ein Behandlungsaggregat 20 auf bekannte Weise angeordnet ist.

Mit der Behandlungsanlage 1 kann beispielsweise wie folgt gearbeitet werden.

Die Behälter 2 werden vorzugsweise geradlinig uns kontinuierlich auf dem Einlaufband 11 antransportiert. Bei den Behältern 2 handelt es sich vorzugsweise um mit Produkt gefüllte und verschlossene Behälter aus Kunststoff, wie beispielsweise PET-Flaschen. Die Behälter 2 laufen aufrechtstehend und vorzugsweise lückenlos mit vergleichsweise geringem Staudruck auf den Einlaufband 11 ein. An ihren Seitenwänden 2b werden sie dabei vorzugsweise beidseitig von reibungsmindernden Rollengeländern geführt und die Hals- und/oder Verschlussbereiche 2a der Behälter 2 zwischen die Führungsschienen 12, 13 eingefädelt.

Die Führungsschienen 12, 13 führen die Hals- und/oder Verschlussbereiche 2a vorzugsweise unterhalb von daran ausgebildeten Tragringen. Auch im Bereich der Führungsschienen 12, 13 bleiben die Behälter 2 aufrechtstehend in Kontakt mit dem Einlaufband 11.

Die Behälter 2 drängen nacheinander in den Einlaufbereich des Einteilsterns 3, laufen dabei in jeweils eine Transporttasche 9 und werden schließlich von deren Mitnehmerflanken 9b im Abstand der Maschinenteilung 4 mitgenommen. Dieser Verfahrensschritt, also das Herstellen der Transportteilung 4, läuft vorzugsweise innerhalb eines in der Figur 2 schematisch angedeuteten Winkelsegments 22 von höchstens 60° und insbesondere höchstens 45° ab. Dadurch ist die Transportteilung 4 hergestellt und die aufrechtstehende Transportlage stabilisiert, bevor die Behälter 2 den Bereich des Einlaufsterns 5 erreicht haben, also vor Beginn des Verfahrensschritts der Übergabe der Behälter 2 an die Klammern 10 des Einlaufsterns 5. Zwischen der Einlaufrichtung 6 der Behälter 2 und ihrer Transportrichtung 7 bei der Übergabe an den Einlaufstern 5 werden die Behälter dabei um wenigstens 90° umgelenkt und laufen dabei im Wesentlichen entlang einer kreissegmentförmigen Bewegungsbahn. Dabei bleiben die Hals- und/oder Verschlussbereiche 2a durchweg im Eingriff mit den Mitnehmerflanken 9b der Transporttaschen 9.

Die Behälter 2 werden im gesamten Transportbereich des Einteilsterns 3 von den Führungsgeländern 12, 13 und vorzugsweise von wenigstens einem der Rollengeländer 14, 15 seitlich geführt. Bei der Übergabe der Behälter 2 an den Einlaufstern 5 gleiten die Behälter 2 im Wesentlichen aufrechtstehend auf der Gleitunterlage 16.

Bei der Umlenkung des Behälterstroms am Einteilstern 3 aus der Einlaufrichtung 6 in die Transportrichtung 7 werden die Behälter anfangs von den Transporttaschen 9 an ihren Hals- und/oder Verschlussbereichen 2a vom Einlaufband 11 auf die anschließende Gleitunterlage 16 geschoben, wobei die Behälter 2 durchgehend Bodenkontakt behalten. Ein Aufsteigen und/oder ein Kippen der Behälter 2 wird dabei durch die Abdeckplatte 17 im Wesentlichen verhindert oder zumindest auf ein vorgegebenes Maß begrenzt.

Die Behälter 2 werden von den steuerbaren Klammern 10 des Einlaufsterns 5 unterhalb ihrer Hals- und/oder Verschlussbereiche 2a umgriffen und an ein stromabwärts anschließendes Transportmittel 19 der Behandlungsmaschine 1 übergeben.

Der Einfachheit halber ist in der Figur 1 an dieser Stelle ein Transportband dargestellt. Vorzugsweise handelt es sich bei dem nachfolgenden Transportmittel 19 jedoch um ein Maschinenkarussell, an dem beispielsweise peripher Behandlungsaggregate 20 zur Behandlung der Behälter 2 angedockt sind. Die Übergabe der Behälter 2 vom Einlaufstern 5 an das Transportmittel 19 erfolgt auf prinzipiell bekannte Weise und ist daher nicht näher erläutert.

Mit der beschriebenen Behandlungsmaschine 1 und dem beschriebenen Verfahren zum Einteilen der Behälter 2 auf die Maschinenteilung 4 der Behandlungsmaschine 1 können insbesondere gefüllte Kunststoffbehälter, wie beispielsweise mit Getränk befüllte PET-Flaschen, besonders materialschonend und hinsichtlich der Verarbeitung unterschiedlicher Behälterformate flexibel ihrer Behandlung zugeführt werden.

Für Formatanpassungen kann beispielsweise der Einteilstern 3 im Bereich seiner Transporttaschen 9 und der Abdeckplatte 17 in seiner Höhenlage verstellt werden, ebenso die Führungsschienen 12, 13. Die Rollengeländer 14, 15 könnten je nach Behälterquerschnitt ausgetauscht werden, um nötige Umrüstarbeiten auf ein Minimum zu reduzieren.

## Patentansprüche

1. Verfahren zum Einteilen von Behältern (2) aus Kunststoff, insbesondere aus PET, auf eine Transportteilung (4) einer Behandlungsmaschine (1), wobei ein rotierender Einteilstern (3), der eine Einlaufrichtung (6) für die einzuteilenden Behälter (2) und eine Transportrichtung (7) bei der Übergabe der eingeteilten Behälter (2) an einen Einlaufstern (5) der Behandlungsmaschine (1) aufweist, der in der Einlaufrichtung (6) stehend antransportierten Behälter (2) an ihren Hals- und/oder Verschlussbereichen (2a) im Abstand der Transportteilung (4) mitnimmt und diese dadurch herstellt und die Behälter (2) bis zur Übergabe an den Einlaufstern (5) weitertransportiert, wobei sich dabei die Transportrichtung (7) der Behälter (2) ausgehend von der Einlaufrichtung (6) um wenigstens 90° bis zur Übergabe ändert, **dadurch gekennzeichnet, dass** die Behälter (2) auf einem Einlaufband (11) stehend einlaufen und vom Einteilstern (3) an ihren Hals- und/ oder Verschlussbereichen (2a) vom Einlaufband (11) geschoben werden, und dass oberhalb des Einlaufbands (11) angeordnete Führungsschienen (12, 13), von denen eine bezüglich des Teilkreises des Einteilsterns (3) außen und die andere innen liegt, die Hals- und/oder Verschlussbereiche (2a) im Wesentlichen mittig bezüglich einer vorgegebenen Bewegungsbahn zum Einteilstern (3) hin und um diesen herum führen.

2. Verfahren nach Anspruch 1, wobei der Einteilstern (3) die Behälter (2) ausgehend von der Einlaufrichtung (6) innerhalb eines Winkelsegments (22) von höchstens 60° auf die Transportteilung (4) bringt, sodass die Behälter spätestens nach Durchlaufen dieses Winkelsegments in bezüglich am Einteilstern ausgebildeter Transporttaschen (9) definierten Sollpositionen mitgenommen werden.

3. Verfahren nach Anspruch 1 oder 2, wobei die Behälter (2) an ihren Hals- und/oder Verschlussbereichen (2a) von am Einteilstern (3) ausgebildeten Transporttaschen (9) mitgenommen und aufrechtstehend zum Einlaufstern (5) geschoben werden.

4. Verfahren nach wenigstens einem der vorigen Ansprüche, wobei die Behälter (2) an ihren Seitenwänden (2b) wenigstens von außen her mittels eines Rollengeländers (14, 15) seitlich um den Einteilstern (3) geführt werden.

5. Verfahren nach wenigstens einem der vorigen Ansprüche, wobei die Behälter (2) vom Einteilstern (3) an ihren Hals- und/oder Verschlussbereichen (2a) seitlich vom Einlaufband (11) geschoben werden.

6. Verfahren nach wenigstens einem der vorigen Ansprüche, wobei die Behälter (2) am Einlaufstern (5) von aktiv steuerbaren Klammern (10) unterhalb ihrer Hals- und/oder Verschlussbereiche (2a) übernommen werden.

7. Behandlungsmaschine (1) für Behälter (2) aus Kunststoff, umfassend: einen Einteilstern (3) zum Einteilen der Behälter (2) auf eine Transportteilung (4) der Behandlungsmaschine (1) und einen anschließenden Einlaufstern (5), wobei der Einteilstern (3) im Abstand der Transportteilung (4) angeordnete Transporttaschen (9) zur Mitnahme der Behälter (2) an ihren Hals- und/oder Verschlussbereichen (2a) und zum Herstellen der Transportteilung (4), eine Einlaufrichtung (6) der einzuteilenden Behälter (2) und eine Transportrichtung (7) bei Übergabe der eingeteilten Behälter (2) an den Einlaufstern (5) aufweist, wobei die Einlaufrichtung (6) und die Transportrichtung (7) einen Umlenkwinkel (8) von wenigstens 90° einschließen, **dadurch gekennzeichnet, dass** die Behandlungsmaschine (1) ferner ein Einlaufband (11) zum stehenden Antransport der Behälter (2) und oberhalb davon angeordnete Führungsschienen (12, 13) zur beidseitigen Führung von Hals- und/oder Verschlussbereichen (2a) der Behälter (2) umfasst, und dass bezüglich des Teilkreises des Einteilsterns (3) die eine Führungsschiene (12) außen und die andere Führungsschiene (13) innen liegt, um die Hals- und/oder Verschlussbereiche (2a) im Wesentlichen mittig bezüglich einer vorgegebenen Bewegungsbahn zum Einteilstern (3) hin und um diesen herum zu führen.

8. Behandlungsmaschine nach Anspruch 7, wobei die Transporttaschen (9) von vorderen zumindest abschnittsweise konvex gekrümmten Führungsflanken (9a) und hinteren Mitnehmerflanken (9b) begrenzt sind.

9. Behandlungsmaschine nach Anspruch 7 oder 8, wobei der Einlaufstern (5) ein Klammerstern zum aktiven Umgreifen der Behälter (2) an ihren Seitenwänden (2b) ist.

10. Behandlungsmaschine nach einem der Ansprüche 7 bis 9, ferner mit einer an das Einlaufband (11) anschließenden und sich peripher bis zum Einlaufstern (5) um den Einteilstern (3) erstreckenden Gleitunterlage (16) für die Behälter.

11. Behandlungsmaschine nach einem der Ansprüche 7 bis 10, ferner mit wenigstens einem an das Einlaufband (11) anschließenden Rollengeländer (14, 15) zur seitlichen und insbesondere beidseitigen Führung der Behälter (2) an ihren Seitenwänden (2b) um den Einteilstern (3).

12. Behandlungsmaschine nach einem der Ansprüche 7 bis 11, wobei der Einteilstern (3) eine mitrotierende Abdeckplatte (17) für die Hals- und/oder Verschlussbereiche (2a) umfasst, die diesbezüglich ein Spiel (18) bei orthogonal aufrechter Behälterstellung aufweist und ein Kippen und/oder Anheben der Behälter (2) nach oben hin begrenzt.

## Claims

1. A method for distributing containers (2) made of plastic, in particular PET, on a conveying pitch (4) of a treatment machine (1), wherein a rotating distributing starwheel (3) having an inflow direction (6) for the containers (2) to be distributed and a transport direction (7) for transferring the distributed containers (2) to an inflow star wheel (5) of the treatment machine (1) grasps containers (2) arriving in the flow direction in an upright position at their neck and/or closure regions (2a) in the interval of the conveying pitch (4) thus creating the same and continues to convey the containers (2) until they are transferred to the inflow star wheel (5), and wherein the transport direction of the containers (2) changes by at least 90° starting from the inflow direction (6) until they are transferred,
**characterized in that**
the containers (2), during inflow, are standing on an inflow belt (11) and are pushed off the inflow belt (11) by the distributing starwheel (3) at their neck and/or closure regions (2a) and
**in that**
guiding rails (12, 13) above the inflow belt (11), one of which is arranged outside the pitch circle of the distributing starwheel (3) while the other one is arranged inside thereof, guide the neck and/or closure regions (2a) substantially in the centre of a predetermined trajectory towards the distributing starwheel (3) and around the same.

2. The method according to claim 1, wherein the distributing starwheel (3) makes the containers (2), starting with the inflow direction (6), assume the conveying pitch (4) within an angular segment (22) not larger than 60° such that the containers, after having traversed that angular segment, are driven at target positions defined with respect to transport pockets (9) formed in the distributing starwheel.

3. The method according to claims 1 or 2, wherein the containers (2) are driven at their neck and/or closure regions (2a) by transport pockets (9) formed in the distributing starwheel (3) and are pushed towards the inflow starwheel (5) in an upright position.

4. The method according to at least one of the preceding claims, wherein the containers (2) are at their side walls (2b) guided at least from outside by means of a roller chain (14, 15) laterally around the distributing starwheel (3).

5. The method according to at least one of the preceding claims, wherein the containers (2) are pushed by the distributing starwheel (3) at their neck and/or closure regions (2a) laterally off the inflow belt (11).

6. The method according to at least one of the preceding claims, wherein the containers (2) are received at the inflow star wheel (5) by actively controlled clamps (10) below their neck and/or closure regions (2a).

7. A treatment machine (1) for containers (2) made of plastic comprising:
a distributing starwheel (3) for distributing the containers (2) to a conveying pitch (4) of the treatment machine (1) and a subsequent inflow starwheel (5), wherein the distributing starwheel (3) has transport pockets (9) arranged in the interval of the conveying pitch (4) for driving the containers (2) at their neck and/or closure regions (2a) and for establishing the conveying pitch (4), an inflow direction (6) of the containers (2) to be distributed (2) and a transport direction (7) for the transfer of the distributed containers (2) to the inflow star wheel (5),
wherein the inflow direction (6) and the transport direction (7) include a diverting angle (8) of at least 90°,
**characterized in that**
the treatment machine (1) further comprises an inflow belt (11) for supplying the containers (2) in an upright position and guiding rails (12, 13) positioned thereabove for guiding neck and/or closure regions (2a) of the containers (2) from both sides, and
**in that**
relative to the pitch circle of the distributing starwheel (3) one guiding rail (12) is arranged outside thereof and the other guiding rail (13) is positioned inside thereof for guiding the neck and/or closure regions (2a) substantially in the centre of a predetermined trajectory towards the distributing starwheel (3) and around the same.

8. The treatment machine according to claim 7, wherein the transport pockets (9) are delimited by front guiding flanks (9a) at least partially convexly curved and rear driving flanks (9b).

9. The treatment machine according to claims 7 or 8, wherein the inflow starwheel (5) is a clamping starwheel for actively enclosing the containers (2) at their side walls (2b).

10. The treatment machine according to any one of claims 7 to 9, further comprising a sliding support (16) for the containers linking up to the inflow belt (11) and extending at the periphery around the distributing starwheel (3) up to the inflow starwheel (5).

11. The treatment machine according to any one of claims 7 to 10, further comprising at least one roller chain (14, 15) linking up to the inflow belt (11) for guiding the containers (2) on their side, in particular on both sides, at their side walls (2b) around the distributing starwheel (3).

12. The treatment machine according to any one of claims 7 to 11, wherein the distributing star wheel (3) comprises a co-rotating cover plate (17) for the neck and/or closure regions (2a) having a clearance (18) relative thereto at an orthogonally upright position of the containers and restricting a tipping and/or lifting of the containers (2) in the upward direction.

## Revendications

1. Procédé de division de récipients (2) en matière plastique, en particulier en PET, sur une division de transport (4) d'une machine de traitement (1), dans lequel une étoile de division (3) rotative présentant une direction d'entrée (6) pour les récipients (2) à diviser et une direction de transport (7) lors du transfert des récipients (2) divisés vers une étoile d'entrée (5) de la machine de traitement (1) qui emporte à distance de la division de transport (4) des récipients (2) transportés de manière verticale dans la direction d'entrée (6) au niveau de leurs régions de col et/ou de fermeture (2a) et crée ainsi ladite division, et continue à transporter les récipients (2) jusqu'au transfert vers l'étoile d'entrée (5), dans lequel la direction de transport (7) des récipients (2) est modifiée d'au moins 90° à partir de la direction d'entrée (6) jusqu'au transfert, **caractérisé en ce que** les récipients (2) pénètrent debout sur une bande d'entrée (11) et sont poussés de la bande d'entrée (11) par l'étoile de division (3) au niveau de leurs régions de col et/ou de fermeture (2a), et **en ce que** des rails de guidage (12, 13), agencés au-dessus de la bande d'entrée (11) et dont l'un se trouve à l'extérieur par rapport au cercle primitif de l'étoile de division (3) et l'autre se trouve à l'intérieur, guident les régions de col et/ou de fermeture (2a) essentiellement au centre par rapport à une trajectoire de déplacement prédéfinie vers et autour de l'étoile de division (3).

2. Procédé selon la revendication 1, dans lequel l'étoile de division (3) amène les récipients (2) sur la division de transport (4) à partir de la direction d'entrée (6) à l'intérieur d'un segment angulaire (22) d'au plus 60°, de sorte que les récipients sont emportés dans des positions de consigne définies par rapport aux poches de transport (9) formées au niveau de l'étoile de division au plus tard après le passage par le segment angulaire.

3. Procédé selon la revendication 1 ou 2, dans lequel les récipients (2) sont emportés au niveau de leurs régions de col et/ou de fermeture (2a) par des poches de transport (9) formées au niveau de l'étoile de division (3) et poussés verticalement vers l'étoile d'entrée (5).

4. Procédé selon au moins l'une quelconque des revendications précédentes, dans lequel les récipients (2) sont guidés au niveau de leurs parois latérales (2b) latéralement autour de l'étoile de division (3) au moins de l'extérieur au moyen d'une rampe à rouleaux (14, 15).

5. Procédé selon au moins l'une quelconque des revendications précédentes, dans lequel les récipients (2) sont poussés de la bande d'entrée (11) par l'étoile de division (3) au niveau de leurs régions de col et/ou de fermeture (2a) latéralement.

6. Procédé selon au moins l'une quelconque des revendications précédentes, dans lequel les récipients (2) sont pris en charge au niveau de l'étoile d'entrée (5) sous leurs régions de col et/ou de fermeture (2a) par des pinces (10) pouvant être commandées de manière active.

7. Machine de traitement (1) pour récipients (2) en plastique, comprenant : une étoile de division (3) permettant de diviser les récipients (2) vers une division de transport (4) de la machine de traitement (1) et vers une étoile d'entrée (5) adjacente, dans laquelle l'étoile de division (3) présente des poches de transport (9), agencées à distance de la division de transport (4) et permettant d'emporter les récipients (2) au niveau de leurs régions de col et/ou de fermeture (2a) et permettant de créer la division de transport (4), et une direction d'entrée (6) des récipients (2) à diviser et une direction de transport (7) lors du transfert des récipients (2) divisés vers l'étoile d'entrée (5), dans laquelle la direction d'entrée (6) et la direction de transport (7) forment un angle de déviation (8) d'au moins 90°, **caractérisée en ce que** la machine de traitement (1) comprend en outre une bande d'entrée (11), permettant le transport vertical des récipients (2), et des rails de guidage (12, 13), agencés au-dessus de ladite bande d'entrée et permettant de guider des régions de col et/ou de fermeture (2a) des récipients (2) des deux côtés, et **en ce que**, par rapport au cercle primitif de l'étoile de division (3), un des rails de guidage (12) se trouve à l'extérieur et l'autre rail de guidage (13) se trouve à l'intérieur afin de guider les régions de col et/ou de fermeture (2a) essentiellement au centre par rapport à une trajectoire de déplacement prédéfinie vers et autour de l'étoile de division (3).

8. Machine de traitement selon la revendication 7, dans laquelle les poches de transport (9) sont délimitées par des flancs de guidage antérieurs (9a) incurvés de manière convexe au moins par sections et par des flancs d'emport postérieurs (9b).

9. Machine de traitement selon la revendication 7 ou 8, dans laquelle l'étoile d'entrée (5) est une étoile à pinces permettant d'entourer de manière active les récipients (2) au niveau de leurs parois latérales (2b).

10. Machine de traitement selon l'une quelconque des revendications 7 à 9, comprenant en outre un support de glissement (16) destiné aux récipients et se raccordant à la bande d'entrée (11) et s'étendant de manière périphérique autour de l'étoile de division (3) jusqu'à l'étoile d'entrée (5).

11. Machine de traitement selon l'une quelconque des revendications 7 à 10, comprenant en outre au moins une rampe à rouleaux (14, 15) se raccordant à la bande d'entrée (11) et permettant un guidage, latéral et en particulier des deux côtés, des récipients (2) autour de l'étoile de division (3) au niveau de leurs parois latérales (2b).

12. Machine de traitement selon l'une quelconque des revendications 7 à 11, dans laquelle l'étoile de division (3) comprend une plaque de couverture (17) co-rotative destinée aux régions de col et/ou de fermeture (2a), qui présente par rapport à celles-ci un jeu (18) lorsque les récipients sont dans une position orthogonalement verticale et qui limite vers le haut le basculement et/ou le levage des récipients (2).
